# FASCICULE DE BREVET EUROPEEN

(11) **EP 0 305 291 B1**
(45) Date de publication et mention de la délivrance du brevet: **02.03.1994**
(21) Numéro de dépôt: 88402153.6
(22) Date de dépôt: 24.08.1988
(51) Int. Cl.: G01N 29/04

(54) **Dispositif de contrôle par ultrasons, de la structure interne d'objets**
Verfahren zur Ultraschallprüfung von der inneren Struktur von Gegenständen
Apparatus for the ultrasonic testing of the internal structure of objects

(30) Priorité: 26.08.1987 FR 8711951
(43) Date de publication de la demande: 01.03.1989
(73) Titulaire: COMMISSARIAT A L'ENERGIE ATOMIQUE, 75015 Paris Cédex 15 (FR)
(72) Inventeur: Amaury, Henri, F-33120 Arcachon (FR)
(74) Mandataire: Mongrédien, André

(56) Documents cités:
- EP-A- 0 132 928
- EP-A- 0 202 134
- WO-A-87/03688
- GB-A- 821 131
- US-A- 3 628 375

## Description

La présente invention concerne un dispositif de contrôle par ultrasons, de la structure interne d'objets.

Cette invention s'applique notamment à la vérification de l'homogénéité de la structure interne d'objets. Elle peut également s'appliquer au contrôle d'adhérence de différentes couches de matériaux assemblées entre elles, dans un objet, par exemple par collage ou par frittage.

On connaît un premier type de dispositif de contrôle d'objets qui comporte un émetteur d'ondes ultrasonores en direction de la surface de cet objet, et un récepteur des échos de ces ondes dans l'objet ou à la surface de séparation de deux couches de cet objet. Le temps de parcours qui sépare l'émission des ondes ultrasonores par l'émetteur et la réception des échos de celles-ci par le récepteur, permet de façon connue, de déterminer si la structure interne de cet objet présente des défauts, ou si la surface de séparation de deux couches de cet objet, qui par exemple doivent adhérer parfaitement, présente des décollements.

Ce type de dispositif simple nécessite, pour la transmission acoustique des ondes ultrasonores, l'utilisation d'un liquide de couplage dans lequel sont plongés l'objet à analyser ainsi que l'émetteur et le récepteur. Ce liquide a pour principal inconvénient de polluer la surface de l'objet qui doit ensuite être nettoyée de façon minutieuse. De plus, certains matériaux constituant des objets ne peuvent être plongés dans un produit de couplage qui pourrait produire leur détérioration.

Afin d'éviter cet inconvénient dû notamment au liquide de couplage, un deuxième type de dispositif comprend un émetteur et un récepteur d'ondes ultrasonores qui comportent des embouts constitués dans une matière élastomère qui conduit les ultrasons, ces embouts venant s'appuyer sur la surface de l'objet à contrôler. Les objets qu'il est possible de contrôler avec ce type de dispositif présentent de très faibles surfaces (voisines de 1 cm²) ; pour des objets de grandes surfaces, les temps de contrôle sont si importants que ces dispositifs ne peuvent pas être utilisés.

Afin d'éviter les inconvénients de ce deuxième type de dispositif qui ne contrôle que de très petites surfaces, on peut utiliser un troisième type de dispositif dans lequel l'émetteur et le récepteur sont situés à l'intérieur de roues tournantes; ces roues sont en contact avec la surface de l'objet à contrôler, par l'intermédiaire de bandes de roulements périphériques constituées dans une matière conductrice des ultrasons et présentant une bonne adhérence avec la surface de l'objet, telle qu'un élastomère par exemple. Ce type de dispositif, s'il permet bien le contrôle d'objets présentant de grandes surfaces, doit être plongé, ainsi que l'objet à contrôler, dans un liquide de couplage favorisant la propagation des ultrasons ; il présente donc les mêmes inconvénients que le premier type de dispositif. De plus, le contrôle d'adhérence de couches de différents matériaux d'un objet, est rendu très difficile du fait que les roues présentent un diamètre important (20 cm environ). A ces inconvénients s'ajoutent ceux qui sont dus au fait qu'il n'existe aucun moyen pour maintenir une pression constante des roues sur l'objet au cours du contrôle. Il en résulte que lorsque la surface de l'objet présente des défauts, il se produit des variations de surfaces de contacts entre les bandes de roulement et l'objet, produisant ainsi des variations préjudiciables de la transmission ultrasonore. Enfin, dans certains cas, pour effectuer des contrôles plus précis, il est nécessaire avec ce type de dispositif de régler l'orientation des ondes ultrasonores émises vers la surface de l'objet, et donc de régler l'orientation de l'émetteur. Ce réglage d'orientation de l'émetteur dans ce type de dispositif connu est obtenu en réglant l'orientation de la roue vis-à-vis de la surface de l'objet à contrôler, l'orientation de la roue entraînant celle de l'émetteur. Il en résulte que la bande de roulement de la roue qui contient l'émetteur, ne présente plus qu'un contact très faible avec la surface de l'objet à contrôler lorsque cette roue est trop inclinée par rapport à une direction de référence telle qu'une normale à la surface de l'objet. Il se produit alors une diminution importante de l'intensité des ondes ultra-sonores reçue par l'objet. Enfin, les roues sont trop fortement écartées, du fait de la conception mécanique, ce qui rend difficilement appréciable la localisation d'un défaut dans l'objet.

L'invention se rapporte plus précisément à ce troisième type de dispositif connu et permet de surmonter les inconvénients importants qu'il présente : le dispositif de l'invention ne rend pas nécessaire l'utilisation d'un liquide de couplage dans lequel sont plongés l'objet à contrôler ainsi que le dispositif lui-même. Ce dispositif permet aussi d'éviter de modifier l'orientation de la roue pour modifier l'orientation de l'émetteur. On conserve ainsi une adhérence parfaite entre la bande de roulement de chaque roue et la surface de l'objet à étudier et il ne se produit aucune diminution de l'intensité des ondes reçues par l'objet puisque la roue n'est plus inclinée et que la bande de roulement conserve un bon contact avec la surface. Enfin, la pression des roues sur la surface est rendue constante par des moyens appropriés. Il n'y a donc plus de variations parasites de l'intensité des ondes émises ou reçues lorsque la surface présente des défauts.

L'invention a pour objet un dispositif de contrôle par ultrasons, de la structure interne d'objets comportant deux roues creuses en regard l'une de l'autre, munies de bandes de roulement périphériques et mobiles en rotation autour d'axes respectifs solidaires d'un bâti, des moyens de déplacement du bâti pour que les bandes de roulement présentent au cours du contrôle, des zones successives de contacts avec une surface de l'objet à contrôler, un émetteur d'ondes ultrasonores incidentes, situé à l'intérieur de l'une des roues et émettant ces ondes en direction de la zone de contact correspondante de la bande de roulement de cette roue, un récepteur d'ondes ultrasonores échos dans l'objet, des ondes incidentes, situé à l'intérieur de l'autre roue, ces ondes échos provenant de la zone de contact correspondante de la bande de roulement de cette autre roue, les roues se déplaçant parallèlement l'une à l'autre, des supports internes aux roues et solidaires du bâti pour maintenir respectivement l'émetteur et le récepteur, et des moyens pour assurer le couplage ultrasonore entre l'émetteur et la zone de contact de la bande de roulement correspondante et entre le récepteur et la zone de contact de la bande de roulement correspondante, les roues et les bandes de roulement étant elles mêmes conductrices des ultrasons, caractérisé en ce que le récepteur et son support sont maintenus selon une orientation fixe vis-à-vis d'une direction de référence du bâti, le support de l'émetteur comportant des moyens de réglage de l'orientation de l'émetteur vis-à-vis de la direction de référence de manière à régler l'angle d'incidence des ondes émises vers la zone de contact de la bande de roulement de la roue correspondante,
les axes des roues étant colinéaires, ces roues étant parallèles et présentant avec leurs bandes de roulement un même diamètre.

Selon une autre caractéristique, l'intérieur de chaque roue forme une enceinte étanche, les moyens de couplage comportant un liquide de couplage ultrasonore contenu dans cette enceinte.

Selon une autre caractéristique, les moyens de réglage comprennent un axe solidaire de l'émetteur et perpendiculaire à l'axe de la roue correspondante, et des moyens débouchant à l'extérieur du bâti pour déplacer cet axe en rotation vis-à-vis du support correspondant.

Selon une autre caractéristique, les moyens de déplacement du bâti comprennent des moyens pour déplacer les roues sur la surface de l'objet à contrôler et des moyens pour que ces roues exercent sur cette surface une pression constante.

Les caractéristiques et avantages de l'invention ressortiront mieux de la description qui va suivre donnée en référence aux dessins annexés dans lesquels :
- la figure 1 est une coupe schématique transversale d'un dispositif conforme à l'invention ;
- la figure 2 est une vue en coupe partielle transversale des moyens qui permettent d'orienter l'émetteur d'ultrasons ;
- la figure 3 est une vue schématique en coupe latérale de la roue qui contient le récepteur d'ultrasons ;
- la figure 4 est une vue schématique en coupe latérale de la roue qui contient l'émetteur d'ultrasons ;
- la figure 5 illustre la propagation des ondes ultrasonores dans un objet comportant deux couches de matériaux différents dont l'adhérence est parfaite ;
- la figure 6 illustre la propagation des ondes ultrasonores dans un objet comportant deux couches de matériaux différents présentant un décollement partiel ;
- les figures 7 et 8 illustrent la propagation des ondes ultrasonores dans un objet présentant un défaut de structure.

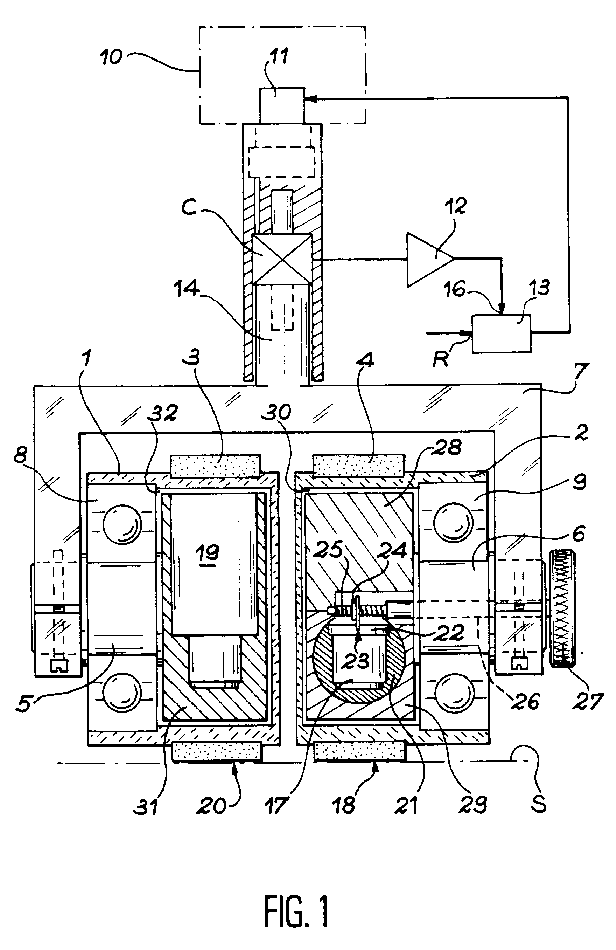

La figure 1 est une coupe schématique transversale d'un dispositif conforme à l'invention. Ce dispositif comporte deux roues creuses 1, 2 situées en regard l'une de l'autre et munies respectivement de bandes de roulements périphériques 3, 4. Ces roues sont mobiles en rotation autour d'axes respectifs 5, 6 solidaires d'un bâti 7. Cette rotation est assurée grâce à des roulements étanches 8, 9.

Les roues 1, 2 peuvent être constituées dans un matériau conducteur des ultrasons tel que le plexiglas par exemple. Les bandes de roulements 3, 4 qui sont respectivement solidaires de ces roues, peuvent être constituées dans une matière élastomère.

Le dispositif comporte aussi des moyens 10 de déplacement du bâti 7 supportant les roues. Ces moyens de déplacement permettent de déplacer les roues sur une surface de l'objet à contrôler, en suivant cette surface de manière que les roues restent en contact avec des zones successives de cette surface au cours du déplacement. Ces moyens peuvent être par exemple constitués par un bras mobile non représenté sur la figure. Ils comprennent aussi des moyens 11, 12, 13 qui permettent de contrôler la pression exercée par le bâti sur les roues et donc sur la surface de l'objet à contrôler, de manière que cette pression soit maintenue constante. Les moyens 11 peuvent être constitués par exemple par une électrovanne contrôlant la force exercée par un piston 14 dans un cylindre. Cette électrovanne est reliée à la sortie d'un comparateur de tension 13 ; ce comparateur reçoit sur une entrée R un signal de référence de tension et reçoit sur une autre entrée 16, un signal de sortie d'un amplificateur 12 ; cet amplificateur reçoit sur une entrée le signal de sortie d'un capteur de pression C. Ces moyens de contrôle de pression sont bien connus dans l'état de la technique et ne seront pas décrits ici en détail.

Le dispositif comporte aussi un émetteur 17 d'ondes ultrasonores incidentes, situé à l'intérieur de la roue 2 et émettant ces ondes ultrasonores en direction d'une zone 18 de contact entre la bande de roulements 4 de la roue 2 et la surface S de l'objet à contrôler.

Le dispositif comporte aussi un récepteur 19 des ondes ultrasonores échos des ondes incidentes dans l'objet. Ce récepteur est situé à l'intérieur de l'autre roue 1, les ondes échos provenant d'une zone de contact 20 entre la bande de roulements 3 de la roue 1 et la surface S de l'objet à contrôler.

Les roues se déplacent parallèlement l'une à l'autre, les axes 5, 6 respectifs de ces roues étant colinéaires et ces roues présentant avec leurs bandes de roulements, un même diamètre. Elles peuvent être très proches l'une de l'autre.

L'émetteur 17 et le récepteur 19 sont respectivement maintenus à l'intérieur des roues 1, 2 par des supports internes à ces roues et solidaires du bâti 7 par l'interméddiaire des axes 5, 6.

Le support de l'émetteur 17 comporte des moyens de réglage de l'orientation de cet émetteur vis-à-vis d'une direction de référence fixe, direction perpendiculaire à l'axe 6 par exemple. L'orientation de l'émetteur correspond en fait à l'angle d'incidence des ondes émises vers la zone de contact 18 de la bande de roulement 4 de la roue 2 correspondante. En fait, les moyens de réglage de l'orientation de l'émetteur, dans le mode de réalisation représenté sur cette figure, comportent un axe cylindrique 21 contenant l'émetteur 17. La partie supérieure 22 de cet émetteur est munie d'une rainure 23 dans laquelle s'engage une pièce 24 de commande de déplacement. Une vis sans fin 25 entrainée par une tige 26, solidaire d'un bouton moleté 27 débouchant à l'extérieur du bâti, s'engage dans un orifice fileté de la pièce de commande de déplacement 24. Selon le sens de rotation du bouton moleté 27, la pièce 24 se déplace vers la droite ou vers la gauche sur la figure, provoquant ainsi le pivotement de l'émetteur 17 et de l'axe cylindrique 21.

L'axe 21 est perpendiculaire à l'axe 6 de la roue 2. Le support de l'émetteur 17 comprend deux pièces intermédiaires 28, 29 dans lesquelles sont logés l'axe 21, la pièce mobile 24, la vis sans fin 25 et la tige 26. Les pièces intermédiaires 28, 29 et l'axe 21 sont constitués dans une matière conductrice des ultrasons telle que l'aluminium par exemple. D'autres moyens assurent le couplage ultrasonore entre l'émetteur et la zone de contact 18 correspondante. Ces moyens de couplage sont constitués par un liquide de couplage 30 qui entoure les pièces intermédiaires 28, 29 à l'intérieur de l'enceinte étanche délimitée par la roue 2 et le roulement étanche 9. Les pièces intermédiaires 28, 29 sont bien entendu rendues solidaires du bâti 7, par exemple par l'intermédiaire de l'axe fixe 6.

Le support du récepteur 19 est constitué par une pièce 31 conductrice des ultrasons, en aluminium par exemple, solidaire de l'axe fixe 5 et située à l'intérieur de l'enceinte étanche formée par la roue 1 et le roulement étanche 8. Cette pièce en aluminium par exemple assure aussi le couplage ultrasonore entre le récepteur 19 et la zone de contact 20 de la bande de roulement correspondante, grâce à d'autres moyens de couplage constitués par un liquide de couplage ultrasonore 32 qui entoure le support 31 et le récepteur 19, à l'intérieur de l'enceinte formée par la roue 1 et le roulement étanche 8.

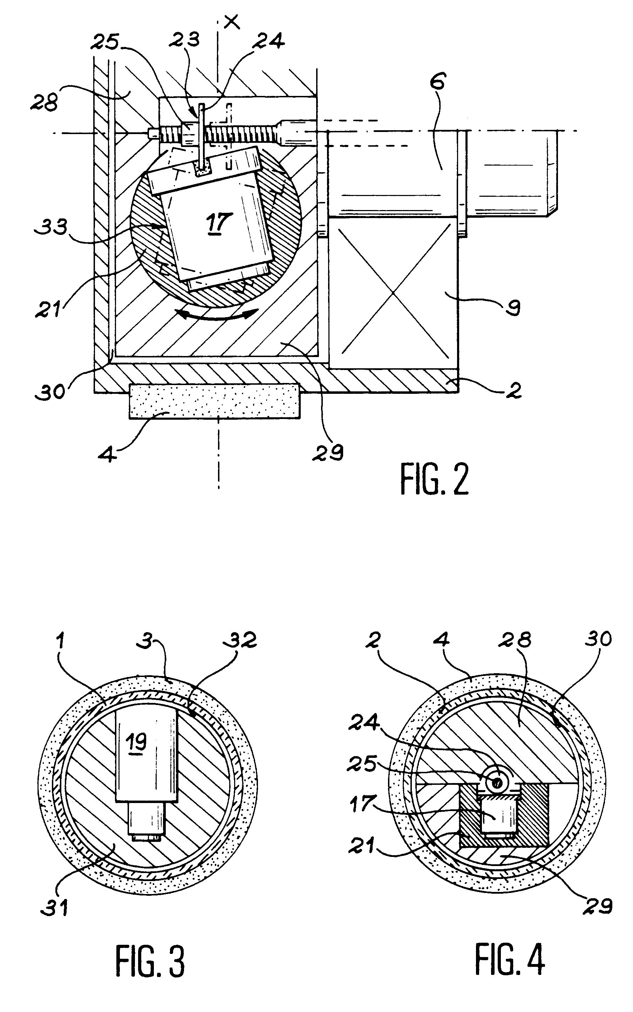

La figure 2 est une coupe partielle transversale qui montre de manière plus détaillée les moyens de réglage de l'orientation de l'émetteur 17 vis-à-vis d'une direction de référence fixe X, perpendiculaire à l'axe 6 par exemple. Les mêmes éléments portent les mêmes références sur cette figure et sur la figure 1. Les traits interrompus 33 représentent une autre orientation de l'émetteur 17 par rapport à la direction de référence X. On voit bien sur cette figure que selon les positions de la pièce 24 entraînée par la vis sans fin 25, les orientations de l'émetteur 17 varient.

La figure 3 est une vue schématique latérale en coupe partielle de la roue 1 contenant le récepteur 19 et le support 31, situés à l'intérieur de cette roue qui est munie de la bande de roulement périphérique 3. Bien entendu le support 31 est solidaire de l'axe de la roue, non représenté sur cette figure et lui-même solidaire du bâti 7. Le liquide de couplage ultrasonore est situé dans l'intervalle 32 compris entre l'intérieur de la roue 1 et la périphérie du support 31.

La figure 4 est une vue schématique latérale en coupe partielle de la roue 2 contenant les pièces 28, 29 du support de l'émetteur 17 qui est situé à l'intérieur de l'axe 21 permettant de faire pivoter cet émetteur. On a aussi représenté sur cette figure la bande de roulement 4 à la périphérie de la roue 2, ainsi que la vis sans fin 25 entraînant la pièce 26 pour orienter l'émetteur par rapport à la direction de référence.

Le liquide de couplage ultrasonore est bien entendu situé dans l'intervalle 30 compris entre l'intérieur de la roue 2 et la périphérie des pièces 23, 24.

On n'a pas représenté sur cette figure les lignes électriques qui permettent d'alimenter l'émetteur et le récepteur et de recueillir les signaux résultant des échos des ondes ultrasonores reçues par le récepteur.

L'orientation de l'émetteur permet de faire varier l'angle d'incidence par rapport à la direction de référence, des ondes ultrasonores émises vers l'objet à contrôler. Cette orientation permet en fait de choisir la meilleure orientation de l'émetteur en fonction de la vitesse de propagation des ondes ultrasonores émises dans le matériau constituant l'objet à contrôler. Cet angle d'émission est fixé et réglé en fonction de la célérité des ondes dans le matériau à contrôler, ainsi qu'en fonction de la profondeur de la couche de matériau de l'objet à contrôler. Ces paramètres sont déterminés de manière connue grâce à la loi de SNELL. Grâce au dispositif de l'invention qui permet d'orienter l'émetteur, il est possible, sans calcul, de s'adapter à des matériaux pour lesquels les vitesses de propagation des ondes ultrasonores sont inconnues.

Comme on le verra plus loin en détail, le réglage de l'orientation de l'émetteur s'effectue en fait en fonction du signal fourni par le récepteur, et qui résulte des ondes ultrasonores réfléchies dans le matériau de l'objet à contrôler. La bande de roulement constituée en matériau élastomère permet d'assurer un bon contact avec la surface, sans polluer celle-ci et sans la détériorer. Les moyens qui permettent aux roues d'exercer une pression constante sur la surface de l'objet à contrôler sont particulièrement utiles, notamment lorsque cette surface présente des défauts. En effet, dans ce cas si la pression exercée par les bandes de roulements sur la surface n'était pas constante, les défauts de surface feraient varier les étendues des zones de contact entre les bandes de roulements et cette surface et les signaux fournis par le récepteur résultant des échos des ondes ultrasnores dans le matériau constituant l'objet, seraient perturbés par ces défauts.

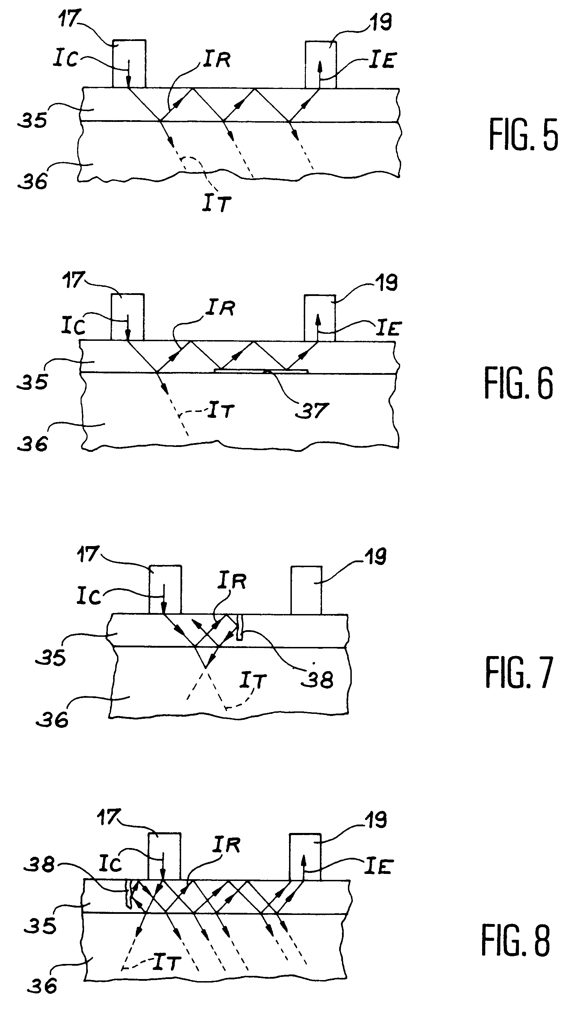

Les figures 5 à 8 permettent de mieux comprendre l'influence de l'angle d'orientation de l'émetteur dans les contrôles effectués à l'aide du dispositif.

La figure 5 est une vue schématique latérale d'un objet qui comporte deux couches successives 35, 36 de matériaux différents d'un objet. Sur cette figure, l'émetteur d'ondes ultrasonores est représenté en 17, tandis que le récepteur est représenté schématiquement en 19. On considère dans cet exemple que l'adhérence des couches 35, 36 est parfaite. Sur cette figure I_{C} désigne les ondes ultrasonores incidentes, I_{T} les ondes ultrasonores transmises dans la deuxième couche de matériaux 36, I_{R} les ondes ultrasonores réfléchies à la surface de séparation des matériaux des couches 35, 36 et I_{E} les ondes ultrasonores échos ainsi reçues par le récepteur 19. Il est clair d'après cette figure que le nombre de réflexions des ondes ultrasonores à l'intérieur de la couche 35 dépend non seulement des impédances acoustiques des matériaux, mais aussi de l'orientation de l'émetteur 17 (loi de SNELL).

La figure 6 correspond au cas où il existe un décollement partiel 37 entre les couches 35 et 36. Dans ce cas l'intensité des ondes I_{T} transmises dans la couche 36, est inférieure à l'intensité des ondes transmises dans cette couche dans le cas de l'exemple de la figure 5 précédente. Dans le cas de la figure 6, l'intensité des ondes ultrasonores I_{E} reçues par le récepteur 19 et qui correspondent aux ondes réfléchies I_{R}, est bien plus importante que dans le cas de l'exemple précédent. Dans ce cas aussi, la variation de l'orientation de l'émetteur est un paramètre important pour repérer le défaut 37.

La figure 7 représente le cas où l'une des couches 35 de matériaux de l'objet, comporte une fissure 38. Lorsque la fissure est située entre l'émetteur et le récepteur, il y a une diminution très importante de l'intensité des ondes ultrasonores échos I_{E} reçues par le récepteur et, dans certains cas, tel que représenté sur la figure, une absence totale de réception des ondes échos.

Lorsqu'au contraire, tel que représenté sur la figure 8, la fissure est située au voisinage de l'émetteur ou du récepteur et que l'émetteur et le récepteur sont situés du même côté de cette fissure, il y a augmentation de l'intensité des ondes ultrasonores reçues.

La comparaison entre les cas des figures 5 et 7, montre qu'il est nécessaire de pouvoir faire la différence entre une intensité faible d'ondes ultrasonores reçues correspondant à une excellente adhérence des couches 35 et 36 de matériaux, et une intensité faible ou nulle correspondant à une fissure située entre l'émetteur et le récepteur. De la même manière, la comparaison des figures 6 et 8 montre qu'il est nécessaire de pouvoir faire la différence entre un faible décollement entre les deux couches de matériaux 35 et 36 et une fissure située au voisinage de l'émetteur ou du récepteur. Dans ces deux cas en effet, l'intensité des ondes ultrasonores reçues, est importante.

Pour pouvoir faire ces différences, il est nécessaire de faire varier le nombre de réflexions à l'intérieur de la première couche 35 de matériaux de l'objet à contrôler. Cette variation est obtenue grâce au changement de l'orientation de l'émetteur. Ce réglage angulaire permet d'avoir un nombre minimum de réflexions et ainsi de mieux localiser tout défaut.

L'invention permet bien d'atteindre les buts mentionnés plus haut : un bon contact et sans pollution entre la bande de roulement de chacune des roues et la surface de l'objet à analyser, une pression constante de cette bande de roulement sur cette surface, une localisation très sûre de tout défaut à l'intérieur d'une couche de l'objet à analyser ou à la surface de séparation de deux couches de cet objet. Ce dernier résultat est obtenu notamment grâce à la recherche d'un nombre minimum de réflexions des ondes ultrasonores à l'intérieur de l'objet. Enfin, ce dispositif, grâce au réglage de l'orientation de l'émetteur peut s'adapter très rapidement à des matériaux dont les épaisseurs ou les impédances acoustiques ne sont pas connues. Ce dispositif de dimensions réduites peut être utilisé pour des objets de forme complexe ou dans des espaces réduits.

## Revendications

1. Dispositif de contrôle par ultrasons, de la structure interne d'objets comportant deux roues creuses (1, 2) en regard l'une de l'autre, munies de bandes de roulement (3, 4) périphériques et mobiles en rotation autour d'axes respectifs (5, 6) solidaires d'un bâti (7), des moyens de déplacement (10, 11) du bâti pour que les bandes de roulement présentent au cours du contrôle, des zones successives de contacts (18, 20) avec une surface (S) de l'objet à contrôler, un émetteur d'ondes ultrasonores (17) incidentes, situé à l'intérieur de l'une des roues (2) et émettant ces ondes en direction de la zone de contact correspondante (18) de la bande de roulement de cette roue, un récepteur d'ondes ultrasonores (19) échos dans l'objet, des ondes incidentes, situé à l'intérieur de l'autre roue (1), ces ondes échos provenant de la zone de contact (20) correspondante de la bande de roulement de cette autre roue, les roues se déplaçant parallèlement l'une à l'autre, des supports (28, 29, 31) internes aux roues et solidaires du bâti (7) pour maintenir respectivement l'émetteur et le récepteur, et des moyens (28, 29, 30, 31, 32) pour assurer le couplage ultrasonore entre l'émetteur et la zone de contact de la bande de roulement correspondante et entre le récepteur et la zone de contact de la bande de roulement correspondante, les roues et les bandes de roulement étant elles mêmes conductrices des ultrasons, caractérisé en ce que le récepteur (19) et son support (31) sont maintenus selon une orientation fixe vis-à-vis d'une direction de référence du bâti, le support de l'émetteur comportant des moyens (21, 23, 24, 25, 26) de réglage de l'orientation de l'émetteur vis-à-vis de la direction de référence de manière à régler l'angle d'incidence des ondes émises vers la zone de contact (18) de la bande de roulement de la roue correspondante,
les axes des roues (5, 6) étant colinéaires, ces roues étant parallèles et présentant avec leurs bandes de roulement (3, 4) un même diamètre.

2. Dispositif selon la revendication 1, caractérisé en ce que l'intérieur de chaque roue forme une enceinte étanche, les moyens de couplage comportant un liquide de couplage ultrasonore (30, 32) contenu dans cette enceinte.

3. Dispositif selon la revendication 2, caractérisé en ce que les moyens de réglage comprennent un axe (21) solidaire de l'émetteur (17) et perpendiculaire à l'axe (6) de la roue correspondante, et des moyens (24, 25, 26, 27) débouchant à l'extérieur du bâti (7) pour déplacer cet axe en rotation vis-à-vis du support (28, 29) correspondant.

4. Dispositif selon la revendication 2, caractérisé en ce que les moyens de déplacement du bâti comprennent des moyens (10) pour déplacer les roues sur la surface (S) de l'objet à contrôler et des moyens (11, 12, 13, 14) pour que ces roues exercent sur cette surface une pression constante.

## Claims

1. Apparatus for the ultrasonic testing of the internal structure of objects comprising two facing hollow wheels (1, 2) provided with peripheral treads (3, 4) and which rotate about respective spindles (5, 6) integral with frame (7), means for the displacement (10, 11) of the frame so that, during testing, the treads have successive contact zones (18, 20) with a surface (S) of the object to be tested, a transmitter (17) of incident ultrasonic waves located within one of the wheels (2) and transmitting waves in the direction of the corresponding contact zone (18) of the tread of said wheel, a receiver (19) of ultrasonic waves constituting echoes in the object of the incident waves located within the other wheel (1), said echo waves coming from the corresponding contact zone (20) of the tread of said other wheel, the wheels moving parallel to one another supports (28, 29, 31) within the wheels and integral with the frame (7) in order to maintain in place respectively the transmitter and receiver, as well as means (28, 29, 30, 31, 32) for ensuring the ultrasonic coupling between the transmitter and the contact zone of the corresponding tread and between the receiver (19) and the contact zone of the corresponding tread, the wheels and the treads conducting ultrasonics, characterized in that the receiver and its support (31) are maintained in accordance with a fixed orientation with respect to a reference direction of the frame, the transmitter support having means (21, 23, 24, 25, 26) for regulating the orientation of the transmitter with respect to the reference direction, in such a way to regulate the angle of incidence of the waves transmitted to the contact zone (18) of the tread of the corresponding wheel, the spindles (5, 6) of the wheels being colinear, said wheels being parallel to one another and with their treads (3, 4) have the same diameter.

2. Apparatus according to claim 1, characterized in that the interior of each wheel forms a tight enclosure, the coupling means incorporating an ultrasonic coupling liquid (30, 32) contained in said enclosure.

3. Apparatus according to claim 2, characterized in that the regulating means comprise a spindle (21) integral with transmitter (17) and perpendicular with the corresponding wheel spindle (6), as well as means (24, 25, 26, 27) issuing outside the frame (4) in order to rotate the spindle with respect to the corresponding support (28, 29).

4. Apparatus according to claim 2, characterized in that the frame displacement means comprise means (10) for displacing the wheels on the surface (S) of the object to be tested and means (11, 12, 13, 14) to ensure that said wheels exert a constant pressure on said surface.

## Patentansprüche

1. Ultraschallvorrichtung zur Untersuchung der Innenstruktur von Objekten, bestehend aus zwei einander gegenüberliegenden hohlen Rädern (1, 2), die außenliegende Laufflächen (3, 4) aufweisen und drehbar um jeweilige Achsen (5, 6) gelagert sind, die mit einem Gestell (7) fest verbunden sind, aus Verfahrmitteln (10, 11) des Gestells, damit die Laufflächen während der Untersuchung aufeinanderfolgende Kontaktzonen (18, 20) an einer Oberfläche (S) des zu untersuchenden Objekts bilden, aus einem Sender (17) für einfallende Ultraschallwellen, der sich innerhalb eines der Räder (2) befindet und diese Wellen zu der entsprechenden Kontaktzone (18) der Lauffläche dieses Rades hin ausstrahlt, aus einem Empfänger (19) für Ultraschallwellenechos der einfallenden Ultraschallwellen in dem Objekt, der sich innerhalb des anderen Rades (1) befindet, wobei diese Echowellen von der entsprechenden Kontaktzone (20) der Lauffläche dieses anderen Rades kommen, wobei die Räder sich parallel zueinander fortbewegen, aus Halterungen (28, 29, 31) in den Rädern, die mit dem Gestell (7) fest verbunden sind, zum Halten des Senders bzw. des Empfängers, und aus Mitteln (28, 29, 30, 31, 32) für die Ultraschallkopplung zwischen dem Sender und der Kontaktzone der entsprechenden Lauffläche sowie zwischen dem Empfänger und der Kontaktzone der entsprechenden Lauffläche, wobei die Räder und die Laufflächen selbst den Ultraschall leiten,
dadurch gekennzeichnet, daß der Empfänger (19) und seine Halterung (31) in einer festen Ausrichtung zu einer Bezugsrichtung des Gestells gehalten werden, wobei die Halterung des Senders Mittel (21, 23, 24, 25, 26) zur Einstellung der Ausrichtung des Senders zur Bezugsrichtung aufweist, so daß der Einfallwinkel der zur Kontaktzone (18) der Lauffläche des entsprechenden Rades ausgestrahlten Wellen eingestellt wird, wobei die Achsen der Räder (5, 6) kolinear sind, wobei diese Räder parallel sind und mit ihren Laufflächen (3, 4) den gleichen Durchmesser aufweisen.

2. Vorrichtung nach Anspruch 1,
dadurch gekennzeichnet, daß das Innere jedes Rades einen dichten Raum bildet, wobei die Kopplungsmittel aus einer Ultraschallkopplungsflüssigkeit (30, 32) bestehen, die in diesem Raum enthalten ist.

3. Vorrichtung nach Anspruch 2,
dadurch gekennzeichnet, daß die Einstellmittel aus einer Achse (21), die mit dem Sender (17) fest verbunden ist und senkrecht zur Achse (6) des entsprechenden Rades liegt, und aus Mitteln (24, 25, 26, 27), die aus dem Gestell (7) herausverlaufen, um diese Achse zu der entsprechenden Halterung (28, 29) zu drehen, bestehen.

4. Vorrichtung nach Anspruch 2,
dadurch gekennzeichnet, daß die Verfahrmittel des Gestells aus Mitteln (10) zum Verfahren der Räder auf der Oberfläche (S) des zu untersuchenden Objekts und aus Mitteln (11, 12, 13, 14), durch die diese Räder auf diese Oberfläche einen gleichmäßigen Druck ausüben, bestehen.
